# FASCICULE DE BREVET EUROPEEN

(11) **EP 1 455 254 B1**
(45) Date de publication et mention de la délivrance du brevet: **09.04.2008**
(21) Numéro de dépôt: 04290437.5
(22) Date de dépôt: 18.02.2004
(51) Int. Cl.: G05D 1/00

(54) **Dispositif d'aide au franchissement d'obstacles**
Hilfevorrichtung zum Überwinden von Hindernissen
Aid to clear obstacles

(30) Priorité: 04.03.2003 FR 0302640
(43) Date de publication de la demande: 08.09.2004
(73) Titulaire: NEXTER Systems, 42328 Roanne (FR)
(72) Inventeur: Pape, Olivier M., 78230 Le Pecq (FR); Leveque, Stéphane, 78370 Plaisir (FR); Urvoy, Emile, 91470 Limours (FR)
(74) Mandataire: Célanie, Christian

(56) Documents cités:
- EP-A- 0 674 976
- US-A- 4 963 889
- US-A- 5 471 391

## Description

Le secteur technique de la présente invention est celui des aides à la conduite de véhicules pilotés ou télé pilotés et plus particulièrement dans le cadre de l'assistance à la manoeuvre ou au franchissement d'obstacle.

Le problème du franchissement d'obstacle pour un véhicule tout terrain existe de longue date pour un véhicule piloté en direct avec un pilote embarqué à son bord et depuis plus récemment pour un véhicule télé-opéré, où le pilote (nommé encore télé-pilote) est débarqué à distance de son véhicule. Le problème principal qui se pose au pilote est d'appréhender la forme de l'obstacle devant ou sous son véhicule, la position de son véhicule relativement à l'obstacle, ainsi que l'assiette de son véhicule en relation avec l'obstacle. On entend par assiette l'orientation dans les trois directions de l'espace du véhicule.

Afin d'être efficace et de pouvoir utiliser le plus efficacement possible les capacités de franchissement de son véhicule le pilote doit pouvoir percevoir à tout instant les positions et orientations de son véhicule en relation avec l'obstacle et connaître instantanément leurs évolutions en réponse à une commande de pilotage effectuée par le pilote tant en avancement qu'en direction et les conséquences instantanées de ces commandes afin de pouvoir appréhender la position d'équilibre instantanée du véhicule sur l'obstacle. La perception du véhicule et de son environnement par le pilote est souvent limitée, tant par la position du pilote à bord du véhicule ou à distance à une position qui n'offre pas le meilleur point d'observation de la scène, ou encore par le véhicule et son opacité qui masque les zones d'intérêt limitant ainsi le champ de perception que pourrait avoir le pilote notamment par vision directe. Ce second phénomène est aussi connu sous le nom « d'angle mort ».

Afin de remédier à ce problème, les pilotes recourent, par exemple, à l'assistance d'un tiers qui se positionne à distance de telle sorte à pouvoir voir globalement la scène avec le véhicule en évolution et ses interactions avec l'obstacle. De ce point d'observation privilégié, le tiers observateur peut guider le pilote en lui indiquant soit les commandes à effectuer soit les marges dont il dispose ou encore tout autre indication au sujet de sa perception.

Un autre type d'aide consiste à améliorer la perception du pilote en étendant son champ de perception. Ainsi il est connu par exemple de faire appel à des dispositifs de renvois. Il est ainsi bien connu d'utiliser des miroirs/rétroviseurs afin d'augmenter le champ de vision du pilote. Cependant les possibilités d'un miroir ou d'un système de miroir restent limitées en ce qu'ils permettent un éloignement restreint du point d'observation équivalent accessible au pilote. Une variante d'un tel système consiste à placer des caméras pour offrir au pilote un autre point d'observation. Ces caméras peuvent être disposées tant sur le véhicule que sur le terrain. Elles permettent d'offrir au pilote de nouveaux points d'observation mais qui restent néanmoins limités aux points d'installation des caméras.

Une amélioration connue de tels systèmes consiste à disposer d'une caméra orientable. L'orientation de la caméra pouvant être commandée avantageusement par un dispositif de type capteur céphalique, les rotations de la caméra reproduisant celles de la tête du pilote. Un tel dispositif permet au pilote d'adapter naturellement son champ de vision à la zone d'intérêt au cours de la manoeuvre. Cependant une telle amélioration n'est que de forme et sur le fond présente les mêmes inconvénients que précédemment.

Il est connu à ce jour dans le domaine des assistances au pilotage divers systèmes munis de capteurs et permettant de fournir au pilote des compléments d'informations sur l'état de son véhicule et/ou de l'environnement de ce dernier afin de lui permettre de réaliser sa tâche de pilotage ou de télé pilotage dans de bonnes conditions de sécurité et en optimisant l'utilisation des performances du véhicules. On trouve ainsi dans l'automobile des dispositifs d'assistance ou d'automatisation de la manoeuvre dans des cas particulier. On cite ainsi les dispositifs permettant d'assister ou de réaliser automatiquement le parcage d'un véhicule. De tels dispositifs sont spécifiques à un type de manoeuvre et ne concernent pas le domaine du franchissement d'obstacle. Ils utilisent de plus des approches complètement différentes tant dans les moyens que dans les fonctions utilisées.

Il est connu dans le domaine de la robotique un dispositif d'aide au télé pilotage d'un robot dit « écureuil » muni de quatre bras dotés chacun d'un crochet et capable de grimper une échelle. Ledit dispositif modélise le robot et l'ènvironnement dans une base de données de dessin géométrique tri dimensionnel de type CAO, afin de présenter au pilote une scène virtuelle. Ceci permet de simplifier la vision de la scène pour l'opérateur et le cas échéant de souligner certains aspects de cette scène virtuelle. Un tel dispositif utilise une connaissance a priori de l'obstacle et du robot (véhicule). Le positionnement du robot est obtenu par la connaissance géométrique de ses angles internes (angles entre ses différents segments articulés) mesurés par des capteurs intégrés à la structure mécanique du robot. On est ici en présence d'un environnement très structuré (échelle) et totalement connu a priori. L'environnement du robot est entièrement modélisé dès avant le début du déplacement par des volumes géométriques élémentaires. Ceci n'est pas le cas de notre problématique où le véhicule évolue en terrain non connu a priori, très peu structuré et localement cartographié juste avant son franchissement. De plus, un obstacle en tout terrain n'est généralement pas modélisable par des formes géométriques élémentaires.

La présente invention remédie à ces différents inconvénients dans le cadre du problème posé.

Le but de la présente invention est d'améliorer la perception du pilote, à chaque instant, de la position et de l'orientation du véhicule relativement à l'obstacle.

L'invention vise à créer un modèle géométrique tridimensionnel de l'obstacle à franchir, et de lui superposer dans une scène virtuelle présentée au pilote, un modèle géométrique tridimensionnel du véhicule afin de bien faire apparaître la position et l'orientation relative du véhicule par rapport à l'obstacle.

L'invention a donc pour objet un dispositif d'aide au franchissement d'un obstacle pour un véhicule comprenant un moyen de mesure de l'assiette du véhicule, un calculateur de traitement, un moyen d'acquisition à distance de l'obstacle à franchir permettant de construire un premier modèle géométrique tridimensionnel de l'obstacle, un second modèle géométrique tridimensionnel du véhicule, et un moyen de visualisation, les deux modèles géométriques étant représentés, dans une scène virtuelle, en temps réel sur le moyen de visualisation, de façon à faire apparaître les positions et orientations relatives des deux modèles, caractérisé en ce que le second modèle géométrique tridimensionnel du véhicule comprend un volume primaire représentatif de la caisse dudit véhicule et des volumes secondaires représentatifs des trains de roulement et dont les positions relativement au volume primaire sont déterminées par mesures des positions relatives des trains de roulement par rapport à la caisse du véhicule.

Selon une autre caractéristique de l'invention, le dispositif comprend un moyen de commande de positionnement permettant de déplacer le point d'observation depuis lequel la scène virtuelle est observée.

Selon une autre caractéristique de l'invention, le moyen d'acquisition comprend un capteur tridimensionnel laser.

Selon une autre caractéristique de l'invention, le capteur tridimensionnel laser est un capteur de type nappe laser muni d'un balayage en élévation.

Selon une autre caractéristique de l'invention, le moyen d'acquisition est une caméra tridimensionnelle.

Selon une autre caractéristique de l'invention, le moyen de mesure de l'assiette comprend un capteur de vitesse de tangage, un capteur de vitesse de roulis et un capteur de vitesse de lacet dont les mesures sont intégrées dans le temps.

Selon une autre caractéristique de l'invention, le moyen de mesure de l'assiette comprend un capteur de cap.

Selon une autre caractéristique de l'invention, le dispositif comprend un moyen de localisation du véhicule permettant d'actualiser, en temps réel, la position du véhicule relativement à l'obstacle.

Selon une autre caractéristique de l'invention, le moyen de localisation comprend un récepteur GPS.

Selon une autre caractéristique de l'invention, le récepteur GPS est du type différentiel et est couplé avec une station de référence.

Selon une autre caractéristique de l'invention, le moyen de localisation comprend une centrale inertielle.

Selon une autre caractéristique de l'invention, le moyen de localisation comprend un odomètre comprenant un moyen de mesure des vitesses des roues/chenilles et un moyen d'intégration de ces mesures en fonction du temps.

Selon une autre caractéristique de l'invention, le moyen de commande de positionnement comprend un joystick trois axes.

Selon une autre caractéristique de l'invention, le dispositif objet de la présente invention, comprend des moyens de mesure des débattements de suspension du véhicule, et les positions des volumes secondaires relativement au volume primaire sont déterminées par les mesures obtenues des moyens de mesures des débattements de suspension.

Selon une autre caractéristique de l'invention, le moyen de visualisation est un moniteur de visualisation.

Selon une autre caractéristique de l'invention, le moyen de visualisation est une lame semi-transparente.

Selon une autre caractéristique de l'invention, le procédé d'aide au franchissement comprend la séquence d'opérations suivantes :
- étape 1 : acquisition d'un premier modèle géométrique de l'obstacle,
- étape 2 : acquisition/détermination de la position du véhicule,
- étape 3 : acquisition/détermination de l'assiette du véhicule,
- étape 4 : calcul de la position et de l'orientation du volume primaire représentatif de la caisse du véhicule relativement au modèle géométrique de l'obstacle,
- étape 5 : calcul de la scène virtuelle superposant le premier modèle et le second modèle,
- étape 6 : visualisation de la scène sur le moyen de visualisation,
- reprise de la séquence à l'étape 2.

Selon une autre caractéristique de l'invention, le procédé insère avant l'étape 5 un étape d'acquisition de la position du point d'observation de la scène virtuelle donnée par le moyen de commande de positionnement.

Selon une autre caractéristique de l'invention, le procédé insère avant l'étape 4 une étape d'acquisition des débattements de suspension, et avant l'étape 5 une étape de calcul de la position et de l'orientation des volumes secondaires représentatifs des trains de roulement, relativement au volume primaire représentatif de la caisse.

Un avantage du dispositif selon l'invention est de permettre de voir, par l'intermédiaire des modèles et de la scène virtuelle, le véhicule en relation avec l'obstacle.

Un autre avantage du dispositif selon l'invention est de permettre en rendant le modèle du véhicule transparent, de s'affranchir des problèmes de masquage (angles morts), dus à l'opacité du véhicule dans la réalité.

Un autre avantage du dispositif selon l'invention est d'offrir la possibilité de déporter le point d'observation hors des positions classiques atteignables dans la réalité : poste de pilotage, position des rétroviseurs, position d'une caméra sur le véhicule ou sur le terrain d'évolution.

Un autre avantage du dispositif selon l'invention est de permettre de placer le point d'observation n'importe où dans l'espace. Il est ainsi possible de choisir, à tout moment, tant l'orientation de la direction d'observation, que la distance depuis laquelle la scène est observée.

Un autre avantage est de permettre, en utilisant des modèles simplifiés du véhicule et de l'obstacle, de ne présenter à l'opérateur que les éléments pertinents de la scène afin de concentrer son attention sur l'essentiel.

Un autre avantage est de permettre, grâce à la scène virtuelle reconstituée, de présenter une scène non perturbée par des éléments réels parasites et bénéficiant de conditions d'éclairage optimales. Ainsi le véhicule et ses points de contacts avec l'obstacle sont représentés dans la scène virtuelle, dégagés d'éléments tels que projections d'eau ou de particules, brouillard, fumée, eau lorsque le véhicule est immergé, obscurité lorsqu'il fait nuit.

D'autres caractéristiques, détails et avantages de l'invention ressortiront plus clairement de la description détaillée donnée ci-après à titre indicatif en relation avec des dessins sur lesquels :
- la figure 1 présente une vue d'ensemble d'un véhicule en cours de franchissement d'un obstacle,

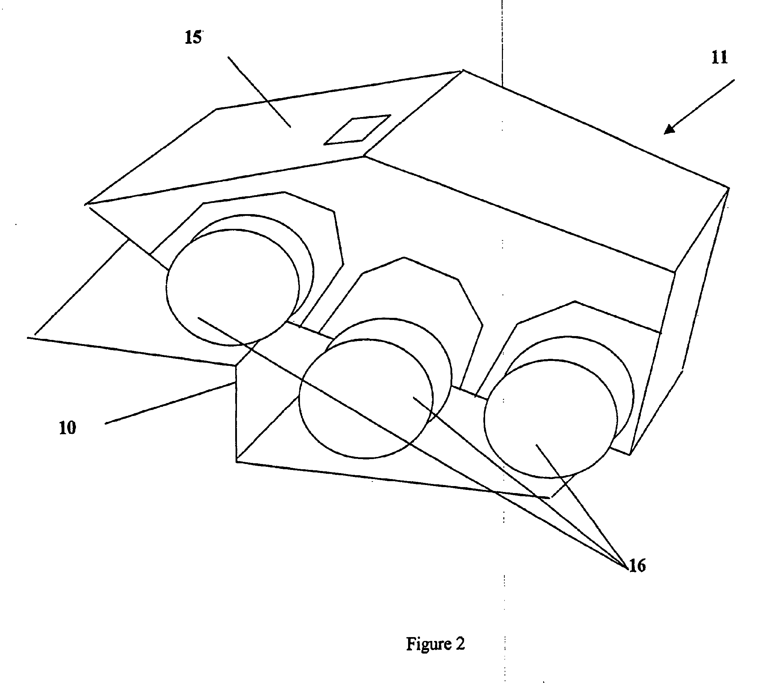

- la figure 2 présente un exemple de scène virtuelle, telle que présentée au pilote/télé-pilote et

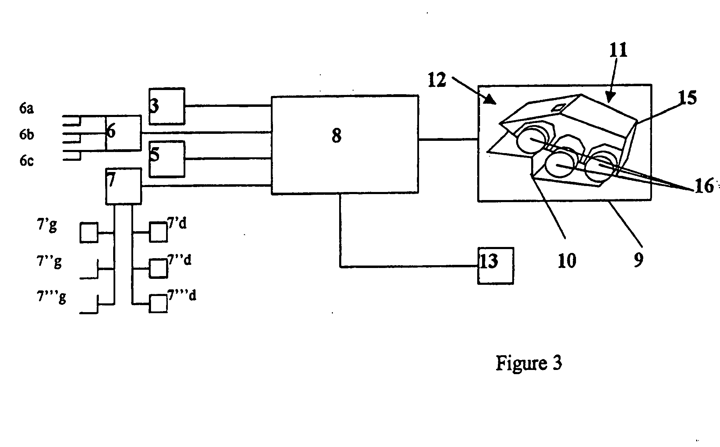

- la figure 3 présente une vue d'ensemble du dispositif selon l'invention.

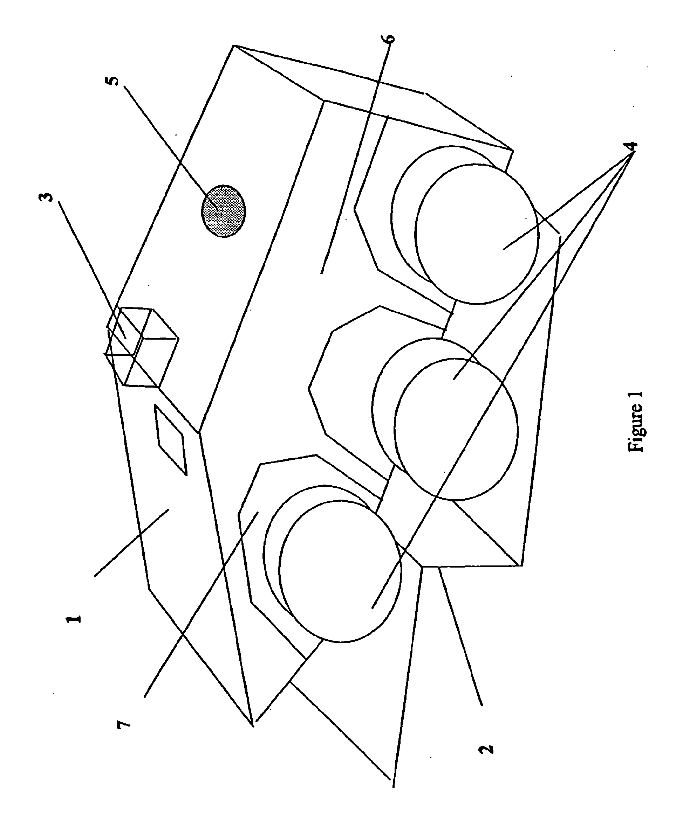

La figure 1, montre un véhicule 1 en cours de franchissement d'un obstacle 2.

A titre illustratif le véhicule est du type à six roues 4. Le dispositif selon l'invention convient tant à des véhicules à roues, quel qu'en soit le nombre, qu'à des véhicules à chenilles. Un train de roulement désigne indifféremment dans la suite de la description une roue ou un galet de chenille.

Le véhicule 1 est équipé d'un moyen d'acquisition 3 de la géométrie de l'obstacle 2. L'obstacle 2 n'est pas connu a priori et peut être quelconque. Ceci confère de grandes possibilités au dispositif selon l'invention qui ne requiert aucun pré-requis concernant l'obstacle 2. Dans une phase préalable au franchissement de l'obstacle 2, le moyen d'acquisition 3 est utilisé pour acquérir un premier modèle géométrique 10 tri-dimensionnel de l'obstacle 2. Ceci s'effectue de manière préalable au franchissement pour obtenir une meilleure vision d'ensemble de l'obstacle 2. Ce modèle consiste en une carte tridimensionnelle de l'obstacle 2, tel que vu depuis le véhicule 1, par le moyen d'acquisition 3. Cette carte tridimensionnelle représente l'obstacle par un ensemble de points de sa surface externe. Chaque point est repéré, par exemple, par deux angles et la distance au moyen d'acquisition 3, si l'on utilise un repérage sphérique. Ceci se prête bien à une acquisition de type télémétrique à balayage qui peut être une des manières de réaliser le moyen d'acquisition 3. Dans le cas d'utilisation d'un tel moyen, on utilise un faisceau télémétrique permettant une mesure de distance, par exemple par temps de vol. Un point visé par le faisceau de mesure est ainsi caractérisé par une mesure de distance : la distance du point au moyen d'acquisition 3, et deux angles indiquant l'orientation du faisceau, par exemple les coordonnées sphériques si l'on utilise avantageusement un repérage sphérique centré sur le moyen d'acquisition 3. Un tel moyen d'acquisition en réalisant un balayage complet de la partie de sphère dans laquelle se trouve l'obstacle, permet, en effectuant une mesure de distance pour chaque couple d'angle (angle 1, angle 2), d'obtenir une carte tridimensionnelle de l'obstacle 10 comprenant un ensemble de triplets (angle 1, angle 2, distance).

Sur ce même principe d'un faisceau, par exemple laser, que l'on balaye selon deux degrés de liberté, il est possible d'utiliser selon une alternative avantageuse, un moyen d'acquisition utilisant une nappe plane qu'il suffit alors de balayer selon un seul degré de liberté, par exemple en élévation.

Il est possible d'envisager d'autres variantes équivalentes d'un moyen d'acquisition de ce type. Il est ainsi possible d'utiliser d'autres types de faisceau : ultrason, lumière, laser ou tout autre type d'onde.

Il est possible de retenir un autre type de mesure de distance par temps de vol, par mesure de phase ou tout autre technologie permettant de mesurer une distance dans une direction donnée.

L'homme de l'art connaît d'autres techniques pour construire cette cartographie tridimensionnelle de l'obstacle. On citera entre autres les méthodes vidéo passives, de type stéréovision, utilisant deux caméras ou une caméra et le mouvement du véhicule qui avec des outils de mise en concordance des deux images permettent d'obtenir les éléments de la dimension manquante, la profondeur.

On pourrait encore citer les méthodes vidéo active où sont combinées l'utilisation d'une caméra vidéo et l'utilisation d'un outil de pointage sur l'obstacle.

Quelle que soit la méthode utilisée pour la mise en oeuvre du moyen d'acquisition, il permet d'obtenir une cartographie de l'obstacle dans un repère, par exemple sphérique, centré sur le moyen d'acquisition 3 solidaire du véhicule.

Il est à noter que cette acquisition est effectuée préférentiellement avant de débuter la phase de franchissement de l'obstacle 2. Si le moyen d'acquisition 3 présente un temps important d'acquisition, dû par exemple à un principe de mesure de la distance ou à un balayage insuffisamment rapide, l'acquisition sera préférentiellement réalisée véhicule 1 à l'arrêt, afin de ne pas compliquer l'obtention de la cartographie de l'obstacle, par une prise en compte du déplacement du moyen d'acquisition 3.

Par un changement de repère bien connu de l'homme de l'art on transforme la cartographie tridimensionnelle de l'obstacle obtenue, exprimée par exemple dans un repère sphérique, en un modèle géométrique de l'obstacle 10, exprimé dans un repère, par exemple cartésien, plus apte à la modélisation et à la projection sur une scène virtuelle 12 aux fins de visualisation. On extrait de cette cartographie la position initiale de l'obstacle dans l'espace relativement au véhicule 1.

La position initiale de ce dernier, acquise par un moyen de localisation absolu 5, est enregistrée, lors de l'acquisition de l'obstacle.

Un calculateur 8 permet d'effectuer l'ensemble des opérations d'acquisition, de mémorisation et de traitement des données afin de modéliser, transformer, changer de repères, construire et préparer la visualisation de la scène virtuelle 12.

Un second modèle géométrique 11 du véhicule est préalablement chargé dans le calculateur 8.

Les deux modèles géométriques 10, 11 sont exprimés dans le même repère géométrique par exemple cartésien centré sur le véhicule. On dispose ainsi d'un ensemble cohérent de données géométriques tridimensionnelles représentant l'obstacle et le véhicule dans l'espace et positionnés relativement l'un par rapport à l'autre. Cet ensemble de données, transmis à un modeleur géométrique, bien connu de l'homme du métier des représentations graphique va pouvoir être projeté sur un plan de visualisation afin d'obtenir une image plane présentable au pilote sur un écran de visualisation.

Le principe de l'invention est de permettre de maintenir à jour en temps réel cette base de données géométrique en actualisant en permanence la position et l'orientation du modèle géométrique 11 du véhicule, relativement au modèle géométrique de l'obstacle 10, au cours du mouvement dudit véhicule durant le franchissement de l'obstacle 2.

En faisant l'hypothèse nécessaire que l'obstacle 2 est immobile, la position relative du véhicule par rapport à l'obstacle ne nécessite que la connaissance de la position du véhicule 1. Le véhicule est assimilé, dans un premier temps à un solide indéformable. Il est donc suffisant pour le positionner dans l'espace de connaître la position d'un de ses points et son orientation autour de ce point.

Un moyen de localisation absolue 5, représenté sur la figure 1 est utilisé pour déterminer la position d'un point particulier. Il est possible de réaliser un tel moyen de localisation absolue en utilisant plusieurs techniques bien connues de l'homme de l'art. Ainsi compte tenu des précisions nécessaire il est, par exemple, possible d'utiliser une centrale inertielle. Le point dont on connaît la position est alors le centre de la centrale. Il est aussi possible d'utiliser un récepteur GPS. Dans ce cas le point dont on connaît la position est l'antenne dudit récepteur. Un récepteur GPS classique, utilisé seul, permet de connaître la position avec une précision métrique. Ceci peut permettre de couvrir certaines applications de franchissement d'obstacle à faibles contraintes. Il est avantageux de compléter le dispositif avec une station GPS fixe. En travaillant en différentiel, c'est à dire en corrigeant la mesure GPS embarqué, de l'erreur mesurée, à chaque instant sur la station fixe, dont la position est connue avec une grande précision, il est possible d'atteindre une précision centimétrique. Ceci permet de répondre efficacement aux besoins du dispositif dans le cas d'un franchissement d'obstacle délicat.

Une alternative à ce moyen de localisation absolue est une détermination à partir d'une mesure relative. Il est possible de mettre à jour la position de l'obstacle 2 par rapport au véhicule 1 en estimant la distance parcourue par odométrie. Cette odométrie peut, par exemple se faire en mesurant les déplacements réalisés par chacun des trains de roulement.

Quelle que soit la méthode retenue on obtient, par le moyen de localisation 5, la position absolue tridimensionnelle d'un point particulier du véhicule 1.

Le véhicule 1 étant assimilé, pour les besoins de la modélisation à un solide, sa position dans l'espace est totalement déterminée si l'on connaît son orientation. Pour acquérir directement par un capteur ou pour déterminer par acquisition et calcul, cette orientation, un moyen de mesure de l'assiette 6 est mis en oeuvre. Le but est de connaître dans un repère donné, les trois angles d'Euler définissant l'orientation/assiette de la caisse du véhicule.

Pour cela l'homme de l'art connaît de nombreux moyens d'acquisition ou de détermination. On peut citer à titre illustratif une centrale gyroscopique constituée de trois gyroscopes 6a, 6b, 6c dont chacun mesure l'angle autour d'un axe parmi roulis, tangage, lacet. On obtient ainsi par acquisition directe les trois angles à chaque instant. De manière analogue on peut utiliser un ensemble de trois gyromètres mesurant chacun autour de son axe la vitesse de rotation instantanée. Il est ainsi possible de déterminer, en intégrant les acquisitions des vitesses par rapport au temps, les trois angles absolus. Ceci suppose que l'on a préalablement déterminé une référence de l'orientation du véhicule. Cette référence est avantageusement prise lors de l'acquisition du modèle de l'obstacle 2, afin d'obtenir l'orientation initiale du véhicule 1 relativement à l'obstacle 2. D'autres réalisations alternatives sont possibles en utilisant un magnétomètre, un capteur de cap, un chercheur de nord ...

Le véhicule étant un solide, la connaissance de la position d'un point et des trois angles d'assiette détermine la position de tout point du véhicule 1. Le positionnement du véhicule 1 relativement à l'obstacle 2 est complètement déterminé par la connaissance de cette position et des trois angles déterminant l'assiette/orientation. La connaissance à chaque instant de la position obtenue par le moyen de localisation 5 et de l'orientation obtenue par le moyen de mesure de l'assiette 6 permet de mettre à jour la base de données géométrique et par projection, la scène virtuelle 12 et sa représentation sur le moyen de visualisation 9.

Le véhicule 1 est dans un premier temps modélisé 11 par un solide unique. Ce solide peut être détaillé pour ressembler au véhicule réel. Plus simplement il pourra être limité à un volume enveloppe simplifié de la caisse du véhicule ou du véhicule complet. On utilisera avantageusement un polygone convexe circonscrivant les points extrêmes du véhicule réel. Un tel modèle permet de représenter le volume occupé dans l'espace par le véhicule ainsi que sa position et son orientation relativement à l'obstacle.

Une information très pertinente lors du traitement d'un franchissement d'obstacle, est la position des points de contact du véhicule 1 avec le sol et donc avec l'obstacle 2. Ils permettent d'appréhender l'équilibre instantané du véhicule 1 par rapport à l'obstacle 2. Pour une bonne représentation, il est avantageux de détailler le modèle 11 du véhicule en modélisant d'une part la caisse, considérée comme un solide, par volume primaire 15 et d'autre part les trains de roulement 4, considérés comme des solides, par des volumes secondaires 16. Ceci peut s'effectuer en considérant un volume secondaire 16 par côté du véhicule. Alternativement on modélise chacun des trains extrêmes par un volume secondaire 16. Ainsi on associe un volume secondaire 16 à la roue/galet avant gauche, un à la roue/galet avant droite, un à la roue/galet arrière/gauche et un dernier à la roue/galet arrière droite, en optant pour ne pas représenter les roues/galets intermédiaires. Alternativement encore on modélise chaque train de roulement en le représentant par un volume secondaire 16.

Le volume secondaire 16 approche la forme du train de roulement qui est considéré indéformable. Cependant son déplacement relativement à la caisse du véhicule est assimilé à un déplacement à un degré de liberté. La géométrie de la suspension au niveau du train de roulement est connue. Il est ainsi possible de déterminer la position du volume secondaire 16 par rapport au volume primaire 15 représentant la caisse du véhicule en connaissant la valeur du débattement de la suspension. Pour cela le véhicule est équipé au droit de chaque train de roulement 4 modélisé individuellement par un volume secondaire 16, d'un moyen de mesure du débattement de la suspension 7'g, 7'd, 7"g, 7"d, 7"'g, 7"'d. Un moyen de mesure, à titre illustratif, peut être un capteur bien connu, mesurant la longueur d'un fil/câble rappelé par un ressort et tendu entre un point de la caisse et un point du train de roulement 4.

Les volumes secondaires 16 sont positionnés et orientés relativement au volume primaire 15. Le volume primaire 15 représentatif de la caisse du véhicule est positionné et orienté à l'aide des mesures issues du moyen de localisation 5 et du moyen de mesure de l'assiette 6 qui sont donc nécessairement positionnés sur la caisse du véhicule 1.

Le modèle du véhicule 11 est ainsi constitué du volume primaire 15 et des volumes secondaires 16, dont les positions et orientations sont déterminées à chaque instant et tenues à jour dans la base de données géométrique.

La superposition dans la même scène virtuelle 12 du modèle de véhicule 11 détaillant un modèle de la caisse 15 et un modèle 16 pour chaque train de roulement et du modèle de l'obstacle 10 permet de visualiser les zones de contact 17 entre train de roulement et la surface de l'obstacle. Cette information est déterminante dans l'assistance au pilote pour la réalisation du franchissement.

L'invention permet d'accéder à des points d'observation 14, normalement inaccessibles. La scène virtuelle 12 plane est obtenue par projection de la base de données géométrique tridimensionnelle contenant le modèle de l'obstacle 10 et le modèle de véhicule 11, sur un plan. Ce plan est déterminé tel qu'il soit orthogonal/médiateur du segment reliant le point d'observation au centre de la zone d'intérêt contenant le véhicule et l'obstacle. Ce centre d'intérêt est le point fixe de la scène virtuelle 12 et de sa visualisation. Il peut être choisi quelconque dans la scène. Il est avantageusement choisi sur le véhicule donnant ainsi l'impression que l'obstacle se rapproche lors du déplacement du véhicule. Alternativement il peut être choisi sur l'obstacle et l'on voit alors le véhicule s'en approcher.

Un des avantages de disposer de modèles tridimensionnels est de pouvoir choisir le point d'observation qui va déterminer tant la direction d'observation de la scène virtuelle 12 par le pilote, que la distance depuis laquelle il l'observe.

Le pilote dans sa fonction de pilotage du véhicule dispose d'un organe de commande de ce dernier, permettant par exemple de commander d'une part l'avancement et d'autre part la direction.

Pour déterminer le point d'observation, le pilote doit positionner un point dans l'espace. Il doit donc déterminer trois coordonnées. Pour cela il dispose d'un moyen de commande de positionnement 13. Ce moyen peut être tout dispositif syntaxeur trois axes connu de l'homme de l'art. Il est ainsi possible d'utiliser une souris tridimensionnelle, un bras articulé de type pantographe ou mannequin d'apprentissage ou un manche à balai/joystick trois axes. Afin d'illustrer un mode de réalisation, on détaille l'utilisation d'un joystick trois axes, du type comprenant deux axes orthogonaux X et Y classiques et un troisième Z obtenu par rotation du manche autour de l'axe de la poignée. Une utilisation possible est d'employer la commande sur X et respectivement Y, pour déplacer le point d'observation respectivement selon deux angles (par exemple : latitude, longitude) sur une sphère centrée sur le centre d'intérêt de la scène, tel que défini plus haut. Ceci permet de tourner autour de la scène afin de choisir la direction d'observation optimale. L'axe Z est dédié à la commande de la distance d'observation. Ceci permet de déterminer le zoom selon lequel la scène est observée.

Après projection de la base de données géométriques sur le plan de visualisation déterminé par rapport au point de visualisation positionné par le pilote est obtenue la scène virtuelle 12.

Il est possible de représenter les différents modèles de l'obstacle 10 et du véhicule 11, 15, 16 selon tous les modes de représentation bien connu de l'homme de l'art de l'infographie. On peut ainsi rechercher un fort réalisme tant des éclairages que des surfaces. Cependant afin de résoudre le problème des « angles morts » dus à l'opacité du véhicule 1, on utilise avantageusement une représentation transparente. Ainsi le modèle du véhicule 11, 15, 16 est avantageusement représenté soit en mode « fil de fer » ou du moins avec tout ou partie de ses surfaces non totalement opaques.

La scène virtuelle 12 plane peut être visualisée sur tout type de moyen de visualisation 9 présentable au pilote. Ce moyen de visualisation 9 peut être un moniteur de visualisation classique. Il peut aussi avantageusement être rendu solidaire de la tête du pilote, placé devant les yeux de ce dernier. La scène virtuelle 12 peut être avantageusement projetée sur un écran semi-réfléchissant permettant au pilote de superposer cette scène visuelle 12 avec une autre visualisation, par exemple nécessaire au pilotage. Ainsi le moyen de visualisation 9 peut être un moniteur intégré au casque, une visualisation de « type tête haute » présentée sur le pare-brise ou sur la visière du casque.

L'ensemble des opérations d'acquisition des paramètres véhicule (localisation, assiette, débattements de suspension), de traitement géométrique, de choix du point d'observation, de projection, puis de visualisation est effectué selon la séquence des revendications 18 à 20 afin d'avoir une prise en compte immédiate des actions du pilote tant pour la visualisation des conséquences des commandes de pilotage sur le nouvel équilibre du véhicule 1 sur l'obstacle 2 que pour la modification de l'orientation d'observation de la scène virtuelle 12. Compte tenu des capacités d'acquisition des moyens de mesure, des volumes de calcul géométrique et de traitement d'image, un cycle temps réel du calculateur 8 de l'ordre de 20 ms est réalisable et compatible des besoins ergonomiques.

Le dispositif selon l'invention permet de traiter le cas le plus complexe du franchissement d'un obstacle. Il découle à l'évidence de la description détaillée qu'il peut s'utiliser dans toute assistance à la manoeuvre, faisant intervenir un ou plusieurs obstacles et où l'avantage de pouvoir obtenir des points d'observations quelconques devient déterminant dans la réussite de la manoeuvre. Ainsi il est possible de traiter des problématiques telles que : contournement d'obstacles, parcage de véhicule, déplacement entre des obstacles, mobilité en espace confiné, etc...

## Revendications

1. Dispositif d'aide au franchissement d'un obstacle (2) pour un véhicule (1) comprenant un moyen de mesure de l'assiette (6) du véhicule (1), un calculateur de traitement (8), un moyen d'acquisition (3) à distance de l'obstacle à franchir permettant de construire un premier modèle géométrique tridimensionnel (10) de l'obstacle (2), un second modèle géométrique tridimensionnel (11) du véhicule (1), et un moyen de visualisation (9), les deux modèles géométriques (10, 11) étant représentés, dans une scène virtuelle (12), en temps réel sur le moyen de visualisation (9), de façon à faire apparaître les positions et orientations relatives des deux modèles (10, 11), **caractérisé en ce que** le second modèle géométrique tridimensionnel (11) du véhicule (1) comprend un volume primaire (15) représentatif de la caisse dudit véhicule (1) et des volumes secondaires (16) représentatifs des trains de roulement et dont les positions relativement au volume primaire (15) sont déterminées par mesures des positions relatives des trains de roulement par rapport à la caisse du véhicule (1).

2. Dispositif d'aide au franchissement selon la revendication 1, **caractérisé en ce qu'**il comprend un moyen de commande de positionnement (13) permettant de déplacer le point d'observation (14) depuis lequel la scène virtuelle (12) est observée.

3. Dispositif d'aide au franchissement selon l'une des revendications 1 ou 2, **caractérisé en ce que** le moyen d'acquisition (3) comprend un capteur tridimensionnel laser (3).

4. Dispositif d'aide au franchissement selon l'une des revendications 1 à 3, **caractérisé en ce que** le capteur tridimensionnel laser (3) est un capteur de type nappe laser muni d'un balayage en élévation.

5. Dispositif d'aide au franchissement selon la revendication 1 ou 2, **caractérisé en ce que** le moyen d'acquisition (3) est une caméra tridimensionnelle.

6. Dispositif d'aide au franchissement selon l'une quelconque des revendications 1 à 5, **caractérisé en ce que** le moyen de mesure de l'assiette (6) comprend un capteur de vitesse de tangage, un capteur de vitesse de roulis et un capteur de vitesse de lacet dont les mesures sont intégrées dans le temps.

7. Dispositif d'aide au franchissement selon l'une quelconque des revendications 1 à 5, **caractérisé en ce que** le moyen de mesure de l'assiette (6) comprend un capteur de cap.

8. Dispositif d'aide au franchissement selon l'une quelconque des revendications 1 à 7, **caractérisé en ce qu'**il comprend un moyen de localisation (5) du véhicule (1) permettant d'actualiser, en temps réel, la position du véhicule (1) relativement à l'obstacle (2).

9. Dispositif d'aide au franchissement selon la revendication 8, **caractérisé en ce que** le moyen de localisation (5) comprend un récepteur GPS.

10. Dispositif d'aide au franchissement selon la revendication 9, **caractérisé en ce que** le récepteur GPS est du type différentiel et est couplé avec une station de référence.

11. Dispositif d'aide au franchissement selon la revendication 8, **caractérisé en ce que** le moyen de localisation (5) comprend une centrale inertielle.

12. Dispositif d'aide au franchissement selon la revendication 8, **caractérisé en ce que** le moyen de localisation (5) comprend un odomètre comprenant un moyen de mesure des vitesses des roues/chenilles et un moyen d'intégration de ces mesures en fonction du temps.

13. Dispositif d'aide au franchissement selon l'une quelconque des revendications 2 à 12, **caractérisé en ce que** le moyen de commande de positionnement (13) comprend un joystick trois axes.

14. Dispositif d'aide au franchissement selon l'une des revendications 1 à 13, **caractérisé en ce qu'**il comprend des moyens de mesure des débattements de suspension (7) du véhicule (1), et **en ce que** les positions des volumes secondaires (16) relativement au volume primaire (15) sont déterminées par les mesures obtenues des moyens de mesures des débattements de suspension (7).

15. Dispositif d'aide au franchissement selon l'une quelconque des revendications 1 à 14, **caractérisé en ce que** le moyen de visualisation (9) est un moniteur de visualisation (9).

16. Dispositif d'aide au franchissement selon l'une quelconque des revendications 1 à 14, **caractérisé en ce que** le moyen de visualisation (9) est une lame semi-transparente.

17. Procédé d'aide au franchissement utilisant le dispositif d'aide au franchissement selon l'une quelconque des revendications précédentes, **caractérisé en ce que** l'on effectue dans l'ordre la séquence d'opérations suivantes :
- étape 1 : acquisition d'un premier modèle géométrique (10) de l'obstacle (2),
- étape 2 : acquisition/détermination de la position (5) du véhicule (1),
- étape 3 : acquisition/détermination de l'assiette (6) du véhicule (1),
- étape 4 : calcul de la position et de l'orientation du volume primaire (15) représentatif de la caisse du véhicule (1) relativement au modèle géométrique (10) de l'obstacle (2),
- étape 5 : calcul de la scène virtuelle (12) superposant le premier modèle (10) et le second modèle (11),
- étape 6 : visualisation de la scène (12) sur le moyen de visualisation (9),
- reprise de la séquence à l'étape 2.

18. Procédé d'aide au franchissement selon la revendication 17, **caractérisé en ce que** l'on insère avant l'étape 5 une étape d'acquisition de la position du point d'observation (14) de la scène virtuelle (12) donnée par le moyen de commande de positionnement (13).

19. Procédé d'aide au franchissement selon la revendication 17 ou 18, **caractérisé en ce que** l'on insère avant l'étape 4 une étape d'acquisition des débattements de suspension (7), et avant l'étape 5 une étape de calcul de la position et de l'orientation des volumes secondaires (16) représentatifs des trains de roulement, relativement au volume primaire (15) représentatif de la caisse.

## Claims

1. A device to aid the clearing of an obstacle (2) for a vehicle (1) comprising means (6) to measure the vehicle's (1) attitude, a processing calculator (8), remote acquisition means (3) for the obstacle to be cleared enabling a first three-dimensional geometric model (10) to be made of the obstacle (2), a second three-dimensional geometric model (11) of the vehicle (1), and display means (9), the two geometric models (10, 11) being represented, in a virtual scene (12), in real time on the display means (9) so as to display the relative positions and orientations of the two models (10, 11), ***characterised in that*** the second three-dimensional geometric model (11) of the vehicle (1) comprises a primary volume (15) representative of the body of said vehicle (1) and secondary volumes (16) representative of running gear and whose positions with respect to the primary volume (15) are determined by measurements of the relative positions of the running gear with respect to the vehicle (1) body.

2. An obstacle clearance aid device according to Claim 1, **characterised in that** it comprises positioning control means (13) enabling the observation point (14) from which the virtual scene (12) is being observed to be moved.

3. An obstacle clearance aid device according to one of Claims 1 or 2, **characterised in that** the acquisition means (3) comprise a three-dimensional laser sensor (3).

4. An obstacle clearance aid device according to one of Claims 1 to 3, **characterised in that** the three-dimensional laser (3) is a sensor of the laser sheet type with scanning at elevation.

5. An obstacle clearance aid device according to Claim 1 or 2, **characterised in that** the acquisition means (3) is a three-dimensional camera.

6. An obstacle clearance aid device according to any one of Claims 1 to 5, **characterised in that** the means (6) to measure the attitude comprise a pitch rate sensor, a roll rate sensor and a yaw rate sensor whose measurements are integrated over time.

7. An obstacle clearance aid device according to any one of Claims 1 to 5, **characterised in that** the attitude measurement means (6) comprise a heading sensor.

8. An obstacle clearance aid device according to any one of Claims 1 to 7, **characterised in that** the device comprises means (5) to locate the vehicle (1) enabling the position of the vehicle (1) with respect to the obstacle (2) to be updated in real time.

9. An obstacle clearance aid device according to Claim 8, **characterised in that** the location means (5) comprise a GPS receiver.

10. An obstacle clearance aid device according to Claim 9, **characterised in that** the GPS receiver is of the differential type and is coupled with a reference station.

11. An obstacle clearance aid device according to Claim 8, **characterised in that** the location means (5) comprise an inertial unit.

12. An obstacle clearance aid device according to Claim 8, **characterised in that** the location means (5) comprise an odometer comprising means to measure the speed of the wheels/tracks and means to integrate these measurements as a function of time.

13. An obstacle clearance aid device according any one of Claims 2 to 12, **characterised in that** the positioning control means (13) comprise a three-axis joystick.

14. An obstacle clearance aid device according to one of Claims 1 to 13, **characterised in that** it comprises means (7) to measure the suspension clearance of the vehicle (1) and wherein the positions of the secondary volumes (16) with respect to the primary volume (15) are determined by measurements obtained from the means (7) to measure the suspension clearance.

15. An obstacle clearance aid device according to any one of Claims 1 to 14, **characterised in that** the display means (9) are formed of a display screen (9).

16. An obstacle clearance aid device according to any one of Claims 1 to 14, **characterised in that** the display means (9) are a semi-transparent sheet.

17. Process to assist obstacle clearance using the obstacle clearance aid device according to any one of the above Claims, **characterised in that** the following sequence of operations are performed in this order:
- Step 1: acquisition of a first geometric model (10) of the obstacle (2),
- Step 2: acquisition/determination of the vehicle's (1) position (5),
- Step 3: acquisition/determination of the vehicle's (1) attitude (6),
- Step 4: calculation of the position and orientation of the primary volume (15) representative of the vehicle body (1) with respect to the geometric model (10) of the obstacle (2),
- Step 5: calculation of the virtual scene (12) superimposing the first model (10) and the second model (11),
- Step 6: scene (12) is displayed on the display means (9),
- the sequence is taken up again from Step 2.

18. An obstacle clearance aid process according to Claim 17, **characterised in that** before step 5 an acquisition step is inserted for the position of the observation point (14) of the virtual scene (12) given by the positioning control means (13).

19. An obstacle clearance aid process according to Claim 17 or 18, **characterised in that** before step 4 an acquisition step is inserted for the suspension clearance (7), and before step 5 a calculation step is inserted for the position and orientation of the secondary volumes (16) representative of the running gear with respect to the primary volume (15) representative of the body.

## Patentansprüche

1. Vorrichtung zur Unterstützung zur Überwindung eines Hindernisses (2) für ein Fahrzeug (1), umfassend ein Mittel zur Messung der Lage (6) des Fahrzeuges (1), einen Rechner zur Verarbeitung (8), ein Mittel zur Erfassung (3) auf Distanz des zu überwindenden Hindernisses, das es ermöglicht, ein erstes geometrisches, dreidimensionales Modell (10) des Hindernisses (2), ein zweites geometrisches, dreidimensionales Modell (11) des Fahrzeuges (1) zu erstellen, und ein Mittel zur Visualisierung (9), wobei die beiden geometrischen Modelle (10, 11) in einer virtuellen Szene (12) in Echtzeit auf dem Mittel zur Visualisierung (9) dargestellt werden, derart, dass die relativen Positionen und Orientierungen der beiden Modelle (10, 11) zum Vorschein kommen, **dadurch gekennzeichnet, dass** das zweite geometrische, dreidimensionale Modell (11) des Fahrzeuges (1) ein primäres, für die Karosserie des so genannten Fahrzeuges (1) repräsentatives Volumen (15) und sekundäre Volumen (16) umfasst, die für die Laufwerke repräsentativ sind und deren Positionen bezüglich des primären Volumens (15) durch Messungen der relativen Positionen der Laufwerke in Bezug auf die Karosserie des Fahrzeuges (1) bestimmt werden.

2. Vorrichtung zur Unterstützung zur Überwindung nach Anspruch 1, **dadurch gekennzeichnet, dass** sie ein Mittel zur Positionssteuerung (13) umfasst, das es ermöglicht, den Beobachtungspunkt (14) zu verschieben, von dem aus die virtuelle Szene (12) beobachtet wird.

3. Vorrichtung zur Unterstützung zur Überwindung nach einem der Ansprüche 1 oder 2, **dadurch gekennzeichnet, dass** das Erfassungsmittel (3) einen dreidimensionalen Laser-Sensor (3) umfasst.

4. Vorrichtung zur Unterstützung zur Überwindung nach einem der Ansprüche 1 bis 3, **dadurch gekennzeichnet, dass** der dreidimensionale Laser-Sensor (3) ein Sensor vom Typ eines Strahlenbündellasers ist, der mit einer Abtastung in der vertikaler Richtung ausgerüstet ist.

5. Vorrichtung zur Unterstützung zur Überwindung nach Anspruch 1 oder 2, **dadurch gekennzeichnet, dass** das Erfassungsmittel (3) eine dreidimensionale Kamera ist.

6. Vorrichtung zur Unterstützung zur Überwindung nach irgendeinem der Ansprüche 1 bis 5, **dadurch gekennzeichnet, dass** das Mittel zur Messung der Lage (6) einen Nickgeschwindigkeitssensor, einen Rollgeschwindigkeitssensor und einen Giergeschwindigkeitssensor umfasst, deren Messungen in die Zeit integriert werden.

7. Vorrichtung zur Unterstützung zur Überwindung nach irgendeinem der Ansprüche 1 bis 5, **dadurch gekennzeichnet, dass** das Mittel zur Messung der Lage (6) einen Fahrtrichtung-Sensor umfasst.

8. Vorrichtung zur Unterstützung zur Überwindung nach irgendeinem der Ansprüche 1 bis 7, **dadurch gekennzeichnet, dass** sie ein Mittel zur Ortsbestimmung (5) des Fahrzeuges (1) umfasst, das es ermöglicht, die Position des Fahrzeuges (1) in Bezug auf das Hindernis (2) in Echtzeit zu aktualisieren.

9. Vorrichtung zur Unterstützung zur Überwindung nach Anspruch 8, **dadurch gekennzeichnet, dass** das Mittel zur Ortsbestimmung (5) einen GPS-Empfänger umfasst.

10. Vorrichtung zur Unterstützung zur Überwindung nach Anspruch 9, **dadurch gekennzeichnet, dass** der GPS-Empfänger von der Bauart ist, die nach dem Differenzprinzip arbeitet, und ist mit einer Referenzstation gekoppelt.

11. Vorrichtung zur Unterstützung zur Überwindung nach Anspruch 8, **dadurch gekennzeichnet, dass** das Mittel zur Ortsbestimmung (5) eine Trägheitsnavigations-Zentrale umfasst.

12. Vorrichtung zur Unterstützung zur Überwindung nach Anspruch 8, **dadurch gekennzeichnet, dass** das Mittel zur Ortsbestimmung (5) einen Wegstreckenmesser umfasst, der ein Mittel zur Messung der Geschwindigkeiten der Räder/Ketten und ein Mittel zur Integration dieser Messungen als Funktion der Zeit umfasst.

13. Vorrichtung zur Unterstützung zur Überwindung nach irgendeinem der Ansprüche 2 bis 12, **dadurch gekennzeichnet, dass** das Mittel zur Positionssteuerung (13) einen Joystick mit drei Achsen umfasst.

14. Vorrichtung zur Unterstützung zur Überwindung nach einem der Ansprüche 1 bis 13, **dadurch gekennzeichnet, dass** sie Mittel zur Messung der Federwege der Aufhängung (7) des Fahrzeuges (1) umfasst, und dass die Positionen der sekundären Volumen (16) bezüglich dem primären Volumen (15) durch die Messungen bestimmt werden, die von den Mitteln zur Messung der Federwege der Aufhängung (7) erzielt werden.

15. Vorrichtung zur Unterstützung zur Überwindung nach irgendeinem der Ansprüche 1 bis 14, **dadurch gekennzeichnet, dass** das Mittel zur Visualisierung (9) ein Monitor zur Visualisierung (9) ist.

16. Vorrichtung zur Unterstützung zur Überwindung nach irgendeinem der Ansprüche 1 bis 14, **dadurch gekennzeichnet, dass** das Mittel zur Visualisierung (9) eine halbtransparente Tafel ist.

17. Verfahren zur Unterstützung zur Überwindung, das die Vorrichtung zur Unterstützung zur Überwindung nach irgendeinem der vorhergehenden Ansprüche verwendet, **dadurch gekennzeichnet, dass** die Folge von folgenden Operationen durchgeführt wird:
- Schritt 1: Erfassung eines ersten geometrischen Modells (10) des Hindernisses (2),
- Schritt 2: Erfassung/Bestimmung der Position (5) des Fahrzeuges (1),
- Schritt 3: Erfassung/Bestimmung der Lage (6) des Fahrzeuges (1),
- Schritt 4: Berechnung der Position und der Orientierung des für die Karosserie des Fahrzeuges (1) repräsentativen primären Volumens (15) bezüglich des geometrischen Modells (10) des Hindernisses (2),
- Schritt 5: Berechnung der virtuellen Szene (12), die das erste Modell (10) und das zweite Modell (11) überlagert,
- Schritt 6: Visualisierung der Szene (12) auf dem Mittel zur Visualisierung (9),
- Wiederaufnahme der Folge des Schrittes 2.

18. Verfahren zur Unterstützung zur Überwindung nach Anspruch 17, **dadurch gekennzeichnet, dass** es vor dem Schritt 5 einen Schritt zur Erfassung der Position des Punktes zur Beobachtung (14) der virtuellen Szene (12) durch das Mittel zur Positionssteuerung (13) einfügt.

19. Verfahren zur Unterstützung zur Überwindung nach Anspruch 17 oder 18, **dadurch gekennzeichnet, dass** es vor dem Schritt 4 einen Schritt zur Erfassung der Federwege der Aufhängung (7) einfügt und vor dem Schritt 5 einen Schritt zur Berechnung der Position und der Orientierung der für die Laufwerke repräsentativen sekundären Volumen (16) bezüglich des für die Karosserie repräsentativen primären Volumens (15).
